# EUROPÄISCHE PATENTANMELDUNG

(11) **EP 4 047 233 A1**
(43) Veröffentlichungstag der Anmeldung: **24.08.2022**
(21) Anmeldenummer: 21157667.3
(22) Anmeldetag: 17.02.2021
(51) Int. Cl.: F16D 3/68, G01N 3/56

(54) **DREHELASTISCHE KUPPLUNG MIT VERSCHLEISSSENSOR**

(71) Anmelder: Flender GmbH, 46395 Bocholt (DE)
(72) Erfinder: Dinter, Ralf Martin, 45888 Gelsenkirchen (DE)
(74) Vertreter: Michalski Hüttermann & Partner Patentanwälte mbB

(57) **Zusammenfassung**

Die Erfindung betrifft eine drehelastische Kupplung (1), wobei die drehelastische Kupplung (1) ein erstes Kupplungsteil (11) mit Elastomeren (2) aufweist, wobei die Elastomere (2) derart in dem ersten Kupplungsteil (11) angeordnet sind, dass durch die Elastomere (2) eine Kraft auf ein zweites Kupplungsteil (12) übertragbar ist, wenn das erste Kupplungsteil (11) und das zweite Kupplungsteil (12) miteinander verbunden sind. Zur Verbesserung der Verschleißerkennung wird vorgeschlagen, dass die drehelastische Kupplung (1) ein Schaltelement (5) aufweist, wobei das Schaltelement (5) zumindest teilweise in einem ersten Elastomer (21) der Elastomere (2) angeordnet ist. Ferner betrifft die Erfindung ein Verfahren zur Herstellung eines ersten Elastomers (21) für eine derartige drehelastische Kupplung (1), wobei das erste Elastomer (21) mittels eines 3D-Drucks gedruckt wird. Die Erfindung betrifft weiter ein Verfahren zum Erkennen eines Verschleißzustandes für eine derartige drehelastische Kupplung (1), wobei durch eine durch einen Verschleiß des Elastomers (2) hervorgerufene Schalthandlung des Schaltelements (5) eine Verschleißgrenze erkannt wird.

## Beschreibung

Die Erfindung betrifft eine drehelastische Kupplung, wobei die drehelastische Kupplung ein erstes Kupplungsteil mit Elastomeren aufweist, wobei die Elastomere derart in dem ersten Kupplungsteil angeordnet sind, dass durch die Elastomere eine Kraft auf ein zweites Kupplungsteil übertragbar ist, wenn das erste Kupplungsteil und das zweite Kupplungsteil miteinander verbunden sind. Weiter betrifft die Erfindung ein Verfahren zur Herstellung eines ersten Elastomers für eine derartige drehelastische Kupplung. Die Erfindung betrifft weiter ein Verfahren zum Erkennen eines Verschleißzustandes für eine derartige drehelastische Kupplung.

Drehelastische Kupplung verwenden Elastomere zur Dämpfung der Drehmomente und dem Ausgleich von Versätzen der verbundenen Drehachsen. Diese Kupplungen werden auch als N-EUPEX Kupplungen oder RUPEX Kupplungen bezeichnet. Die darin verwendeten Elastomere unterliegen einem Verschleiß. Um diesen zu erkennen, kann im Stillstand eine optische Inspektion vorgenommen werden. Alternativ kann im Betrieb der Verschleiß mit Hilfe eines Stroboskobsensors erkannt werden.

Der Erfindung liegt die Aufgabe zugrunde, die Verschleißerkennung bei einer drehelastischen Kupplung zu verbessern.

Diese Aufgabe wird durch eine drehelastische Kupplung gelöst, wobei die drehelastische Kupplung ein erstes Kupplungsteil mit Elastomeren aufweist, wobei die Elastomere derart in dem ersten Kupplungsteil angeordnet sind, dass durch die Elastomere eine Kraft auf ein zweites Kupplungsteil übertragbar ist, wenn das erste Kupplungsteil und das zweite Kupplungsteil miteinander verbunden sind, wobei die drehelastische Kupplung ein Schaltelement aufweist, wobei das Schaltelement zumindest teilweise in einem ersten Elastomer der Elastomeren angeordnet ist. Ferner wird diese Aufgabe durch ein Verfahren zur Herstellung eines ersten Elastomers für eine derartige drehelastische Kupplung gelöst, wobei das erste Elastomer mittels eines 3D-Drucks gedruckt wird. Die Aufgabe wird weiter durch ein Verfahren zum Erkennen eines Verschleißzustandes für eine derartige drehelastische Kupplung gelöst, wobei durch eine durch einen Verschleiß des Elastomers hervorgerufene Schalthandlung des Schaltelements eine Verschleißgrenze erkannt wird.

Weitere vorteilhafte Ausgestaltungen der Erfindung sind in den abhängigen Ansprüchen angegeben.

Der Erfindung liegt unter anderem die Erkenntnis zugrunde, dass sich die Verschleißerkennung verbessern lässt, wenn ein Schaltelement zumindest teilweise in das Elastomer integriert wird. Die Elastomere können dabei in vorteilhafter Weise, aber nicht notwendigerweise, kreisförmig an dem ersten Kupplungsteil angeordnet sein. Dabei werden die Elastomere bei der Übertragung des Drehmoments in der Kupplung nahezu gleich belastet. Darüber hinaus ist es vorteilhaft, die Elastomere äquidistant zueinander auf der Kreisbahn anzuordnen, um auch damit die Belastung auf die entsprechenden Kupplungsteile und die einzelnen Elastomere gleichmäßig aufzuteilen. Das Schaltelement kann dabei sowohl derart ausgelegt sein, dass es bei Erreichen einer Verschleißgrenze öffnet, als auch bei Erreichen der Verschleißgrenze schließt. Damit ist es möglich, sowohl eine aktive als auch eine passive Überwachung des Verschleißes herzustellen. Um die Information über eine erkannte Verschleißgrenze aus der drehenden Kupplung heraus zu übermitteln, hat sich die Verwendung eines Funksenders als vorteilhaft erwiesen. Dieser kann beispielsweise im Elastomer oder auch an anderer Stelle in der Kupplung angeordnet sein. Alternativ oder ergänzend ist es auch möglich, das Erreichen der Verschleißgrenze optisch anzuzeigen. Dazu kann beispielsweise ein Leuchtmittel wie eine Lampe oder LED an der Kupplung angebracht sein, vorzugsweise außen, angebracht sein, und beispielsweise leuchten oder blinken, wenn die Verschleißgrenze erreicht ist. Alternativ ist es auch möglich, dass die Farbe des Leuchtmittels sich mit Erreichen der Verschleißgrenze ändert.

Die so übermittelte Information, insbesondere eine digitale Information oder ein digitales Signal, wird von einem Servicepersonal erfasst oder einer Empfangseinheit aufgenommen und kann dem Servicepersonal einen entsprechenden Hinweis über erforderliche Wartungsarbeiten bzw. einen Austausch der drehelastischen Kupplung geben.

Das Schaltelement ist vorteilhafterweise zumindest teilweise in einem ersten Elastomer der Elastomere derart angeordnet, dass sich vor Erreichen einer Verschleißgrenze die im Elastomer angeordneten Teile des Schaltelements sich vollständig im Innern des Elastomers befinden und mit Erreichen der Verschleißgrenze sich ein Anteil des im Elastomer angeordneten Teils der Schaltelemente an eine Oberfläche des Elastomers tritt. Dieser Verschleiß kann sich beispielsweise aufgrund von Abrieb des Elastomers ergeben. Sollte das Elastomer Risse bekommen, würde ebenfalls das Schaltelement ansprechen und diesen Verschleiß erkennen.

Das Merkmal, dass das erste Kupplungsteil und das zweite Kupplungsteil miteinander verbunden sind, beschreibt den Zustand, dass ein Drehmoment zwischen den beiden Kupplungsteilen übertragen werden kann.

Die Realisierung des Schaltelements zumindest in Teilen im Elastomer kann besonders vorteilhaft mittels 3D-Druck beispielsweise durch Verwendung von TPU (Elastomer) erfolgen. Mit dem 3D-Druck ist die Formgestaltung des Elastomers derart flexible, dass das Schaltelement bzw. Teile des Schaltelements auf vielfältige Weise in das Elastomer dauerhaft und vor allem gegenüber dem Elastomer dauerhaft ortsfest eingebracht werden können.

Bei einer vorteilhaften Ausgestaltung der Erfindung sind die Elastomere derart, insbesondere kreisförmig, in dem ersten Kupplungsteil angeordnet, dass sich zwischen den Elastomeren jeweils ein Zwischenraum bildet, wobei das zweite Kupplungsteil der drehelastischen Kupplung Nocken aufweist, wobei die Nocken in die Zwischenräume eingreifen, wenn das erste Kupplungsteil und das zweite Kupplungsteil miteinander verbunden sind. Damit kann auf einfache Weise ein Aufbau mit dem ersten und dem zweiten Kupplungsteil realisiert werden, bei dem die Elastomere derart in dem ersten Kupplungsteil angeordnet sind, dass durch die Elastomere eine Kraft auf ein zweites Kupplungsteil übertragbar ist, wenn das erste Kupplungsteil und das zweite Kupplungsteil miteinander verbunden sind. Für diese Anordnung ist eine Verschleißerkennung von besonderer Bedeutung, da ansonsten die Kupplung ein zu großes Spiel aufweisen kann, das die Funktion des Antriebs unzulässig beeinflusst. Anders ausgedrückt kann ein Spiel in der Anordnung durch die vorgeschlagene Verschleißerfassung auf einfache Weise vermieden und ein zuverlässiger Antrieb zur Verfügung gestellt werden. Diese Art von Kupplung ist besonders vielseitig einsetzbar und mit der vorgeschlagenen Anordnung auch auf einfache Weise hinsichtlich des Verschleißes und damit auf einen sicheren und zuverlässigen Betrieb überwachbar.

Bei einer weiteren vorteilhaften Ausgestaltung der Erfindung weist die drehelastische Kupplung eine Stromversorgung und einen Funksender auf, wobei mittels des Funksenders ein Signal über den Verschleißzustand der drehelastischen Kupplung übertragbar ist. Ein Funksender ist ein kostengünstiges Bauteil, mit dem die Information über den Verschleiß kontaktlos vom Innern der drehelastischen Kupplung, insbesondere vom Inneren des Elastomers, an einen außerhalb der Kupplung angeordneten Empfänger übertragen werden kann. Der Empfänger kann beispielsweise ein Teil eines Condition Monitoring Systems sein, das den Zustand der Anlage, des Antriebs oder der Kupplung erfasst und/oder Wartungsmaßnahmen erkennt und/oder plant. Die Stromversorgung kann auf einfache Weise durch einen Energiespeicher realisiert werden. Je nach Energiebedarf, der bei einer passiven Überwachung kleiner ist als bei einer aktiven Überwachung, kann der Energiespeicher durch eine Batterie, einen Akku oder Kondensator, insbesondere einem Doppelschichtkondensator, realisiert werden.

Bei einer weiteren vorteilhaften Ausgestaltung der Erfindung weist die drehelastische Kupplung eine Stromversorgung und ein Leuchtmittel auf, wobei mittels des Leuchtmittels ein Signal über den Verschleißzustand der drehelastischen Kupplung übertragbar ist. Ein Leuchtmittel ist eine besonders einfache Möglichkeit, einen Verschleißzustand und insbesondere das Erreichen einer Verschleißgrenze anzuzeigen. Auf aufwendige Maßnahmen, wie sie derzeit üblich sind, wie beispielsweise das Auseinanderbauen der Kopplung oder die Verwendung eines Stroboskopsensors kann verzichtet werden. Zudem ist die Verwendung eines Leuchtmittels besonders einfach und die Anwendung erfordert nur wenig elektrische Energie, ist also besonders energiesparend. Der Zustand des Erreichens der Verschleißgrenze kann auf einfache Weise im Betrieb der Kupplung, d.h. während der Rotation der Kupplung erkannt werden.

Bei einer weiteren vorteilhaften Ausgestaltung der Erfindung ist das Schaltelement vollständig im ersten Elastomer angeordnet. Bei dieser Ausgestaltungsform kann das Schaltelement auf einfache Weise durch Drahtschleifen im Innern des Elastomers gebildet werden. Durch Verschleiß ergibt sich ein Abrieb oder Risse an der Oberfläche des Elastomers. Mit Erreichen der Verschleißgrenze tritt zumindest ein Abschnitt der Drahtschleifen an die Oberfläche des ersten Elastomers. Durch weiteren Verschleiß, nun auch an zumindest Teilen der Drahtschleife, wird die Drahtschleife unterbrochen. Diese Unterbrechung, also der Leerlauf, kann detektiert werden. Dabei hat es sich als vorteilhaft erwiesen, die Überwachung auf Unterbrechung zyklisch, insbesondere im Abstand von Stunden durchzuführen, um den Energieverbrauch gering zu halten. Zwischen den zyklisch stattfindenden Überwachungsdurchläufen wird eine Überwachungseinrichtung, welche die Überwachung ausführt in einen sleep Modus versetzt, um die Stromversorgung möglichst wenig zu belasten und den Energieverbrauch gering zu halten. Dadurch kann die Stromversorgung klein, beispielsweise in Form einer Batterie oder eines Kondensators, insbesondere eines Doppelschichtkondensators, realisiert werden. Da auch im verschleißfreien Zustand regelmäßig eine Überwachung mit Energieverbrauch stattfindet, wird diese Überwachung auch als aktive Überwachung bezeichnet. Vorteil dieser Überwachung ist, dass aktiv in den zyklischen Zeitintervallen der Zustand, der noch nicht erreichten Verschleißgrenze detektiert wird. Der Sender hingegen muss nur bei Erkennen der Verschleißgrenze aktiviert werden. Im Rahmen von Komponentenüberwachung der Kupplung, wie einem Condition Monitoring, hat es sich als vorteilhaft erwiesen, auch die Information über das Nichtvorliegen der Verschleißgrenze mittels des Funksenders zu übermitteln.

Bei einer weiteren vorteilhaften Ausgestaltung der Erfindung ist zumindest eine erste Nocke der Nocken zum ersten Elastomer benachbart angeordnet, wenn das erste Kupplungsteil und das zweite Kupplungsteil miteinander verbunden sind, wobei zumindest eine Oberfläche der ersten Nocke elektrisch leitfähig ausgebildet ist, wobei zwei im ersten Elastomer angeordnete Kontakte des Schaltelements derart im ersten Elastomer angeordnet sind, dass beim Vorliegen eines definierten Verschleißzustands die Kontakte mittels der ersten Nocke elektrisch leitend miteinander verbunden sind. Bei dieser Ausgestaltung ist die Drahtschleife Teil des Schaltelements. Dabei ist es hinreichend, wenn die Oberfläche der ersten Nocken leitfähig ausgebildet ist. Diese Nocke verbindet zwei Kontakte im Elastomer mit der Überwachungseinrichtung. Sobald das Elastomer an die Verschleißgrenze gelangt, liegen die Kontakte an der Oberfläche des Elastomers. Durch die leitfähigen anliegenden Nocken werden dies beiden Kontakte elektrisch leitend miteinander verbunden und die Überwachungseinrichtung erkennt dadurch den Kurzschluss. Dieser Zustand kann auch in dieser Ausgestaltung vorteilhafterweise mit einem Funksender an eine Empfangseinheit übertragen werden. Bei dieser Ausgestaltung wird die Verschleißgrenze durch einen Kurzschluss erkannt. Dies hat den Vorteil, dass durch den Leerlauf im Betrieb, also vor Erreichen der Verschleißgrenze, kein Stromfluss erfolgt und damit kein Energieverbrauch für die Überwachung stattfindet. Diese Überwachung wird auch als passive Überwachung bezeichnet, da im Betrieb, also vor Erreichen der Verschleißgrenze, kein Stromfluss bzw. Energieverbrauch stattfindet. Auch dieses Elastomer kann auf einfache Weise mit den oben genannten Vorteilen im 3D-Druckverfahren hergestellt werden.

Dabei kann die Überwachungseinrichtung im Elastomer angeordnet sein. In diesem Fall dient die leitfähige Nocke dazu, die Kontakte zu verbinden, also kurzzuschließen. Alternativ ist es möglich, die Überwachungseinrichtung in der drehelastischen Kupplung außerhalb des Elastomers anzuordnen. In dem Fall weist die leitfähige Nocke auch eine leitende Oberfläche auf. Dabei weist die erste Nocke zwei voneinander isolierte, leitende Oberflächenteile auf, wobei die Oberflächenteile jeweils leitfähig sind. Durch den Kontakt mit der Drahtschleife im Elastomer, insbesondere über die im Elastomer angeordneten Kontakte, wird zwischen den beiden Oberflächenteile bei Erreichen der Verschleißgrenze ein Kurzschluss erzeugt. Dieser Kurzschluss kann durch die Überwachungseinrichtung, die au-ßerhalb des Elastomers angeordnet ist und mit den Oberflächenteilen der ersten Nocke verbunden ist, erkannt werden. Durch Erkennen des Kurzschlusses wird die Verschleißgrenze zuverlässig erkannt. Beide dieser Alternativen stellen passive Überwachungen dar, bei denen vor Erreichen der Verschleißgrenze durch die Überwachung keine oder zumindest nur sehr wenig elektrische Energie verbraucht wird. Eine Energieversorgung, beispielsweise in Form eines Energiespeichers, kann dann besonders klein dimensioniert werden.

Bei einer weiteren vorteilhaften Ausgestaltung der Erfindung wird das Schaltelement durch Verwendung eines elektrisch leitfähigen Materials in das Innere des ersten Elastomers mittels des 3D-Drucks eingebracht. Dabei wird das Schaltelement oder werden die im Elastomer angeordneten Teile des Schaltelements zumindest teilweise ebenfalls mittels 3D-Druck in das Innere des Elastomers gedruckt. Damit ergibt sich eine sichere Anordnung des Schaltelements bzw. der Teile des Schaltelements innerhalb des Elastomers. Das Schaltelement ist somit ortsfest angeordnet und kann nicht verrutschen. Dadurch unterliegt die Verschleißanzeige auch nur geringeren Toleranzen und kann zuverlässig einen definierten Verschleißgrad erkennen und melden. Das Drucken des im Elastomer angeordneten Schaltelements bzw. der im Elastomer angeordneten Teile des Schaltelements erfolgt im 3D-Druckverfahren mit einem elektrisch leitfähigen Material. Damit lässt sich die Lage der Drahtschleife genau mit nur geringen Toleranzen im Elastomer anordnen. Dies ergibt eine besonders genaue und zuverlässige Verschleißüberwachung. Ein zu frühes Erkennen aufgrund von Sicherheitsfaktoren wegen vorhandener Toleranzen und damit eine zu kurze Ausnutzung der Elastomere, bzw. dadurch bedingte zu kurze Wartungsintervalle, werden vermieden. Mit der vorgeschlagenen Ausgestaltung kann eine Überwachung mit geringen Toleranzen bei der Erkennung realisiert werden. Vorhandene Wartungsintervalle der drehelastischen Kupplung werden dadurch verlängert und optimal genutzt.

Bei einer weiteren vorteilhaften Ausgestaltung der Erfindung werden Öffnungen und/oder Hohlräume zum Einlegen von Kontakten in das Innere des ersten Elastomers mittels des 3D-Drucks eingebracht. Dabei können die Öffnungen und/oder Hohlräume zum Einlegen von Kontakten in das Elastomer im 3D-Druck derart realisiert werden, dass diese Kontakte sich dann im Innern des Elastomers befinden. Diese können als Öffnungen im fertigen Zustand des ersten Elastomers zugänglich sein, so dass die Kontakte dann eingebracht werden. Ebenso ist es möglich, den Druckvorgang für das Einlegen der Kontakte zu unterbrechen und nach dem Einlegen fortzusetzen. Dann befinden sich die Kontakte als Hohlraum im Innern des Elastomers und sind von außen nicht mehr zugänglich. Sie sind durch die Anbringung in einem Hohlraum des Elastomers vor äußeren Einflüssen geschützt angeordnet. Ebenso ist es alternativ möglich, auch die Kontakte mittels 3D Druck zu drucken. Darüber hinaus ist es möglich, durch die flexible Formgebung der Öffnung bzw. des Hohlraums die Kontakte derart an diesem Ort zu fixieren, insbesondere zu klemmen, dass diese ohne weitere Befestigungsmittel, also befestigungsmittelfrei, dauerhaft, auch während der Rotation der Kupplung, im Innern des Elastomers angeordnet sind. Dies kann beispielsweise dadurch geschehen, dass die Kontakte in die Öffnungen eingepresst werden. Auch das Drucken der Kontakte ermöglicht die dauerhafte und sichere Fixierung der Kontakte im ersten Elastomer.

Bei einer weiteren vorteilhaften Ausgestaltung der Erfindung wird eine weitere Öffnung und/oder ein weiterer Hohlraum zum Einlegen der Stromversorgung oder des Funksenders in das Innere des ersten Elastomers mittels des 3D-Drucks eingebracht. Auch das Einbringen weiterer Komponenten, wie beispielsweise der Stromversorgung und/oder des Funksenders kann mit Öffnungen und/oder Hohlräumen geschehen, deren Formgebung es ermöglicht, dieser Komponenten auch für den rotierenden Betrieb dauerhaft im Elastomer zu fixieren. Auch diese Komponenten können beispielsweise in die Öffnung gepresst oder geklemmt werden. Insbesondere kann die Öffnung derart ausgebildet sein, dass die Zentrifugalkraft während des Betriebs der Kupplung die Stromversorgung und/oder den Funksender im Inneren des Elastomers fixiert. Der Hohlraum mit der Stromversorgung und/oder dem Funksender kann auch bei dieser Ausgestaltung derart gebildet werden, dass der 3D-Druck zum Einlegen dieser Komponenten unterbrochen wird. Mit dem Fortsetzen des 3D Drucks wird der Hohlraum verschlossen und die Stromversorgung bzw. der Funksender sind sicher im ersten Elastomer angeordnet.

Im Folgenden wird die Erfindung anhand der in den Figuren dargestellten Ausführungsbeispiele näher beschrieben und erläutert. Es zeigen:
- FIG 1: eine drehelastische Kupplung,
- FIG 2 bis FIG 4: Ausführungsbeispiele eines ersten Elastomers und
- FIG 5: ein Ausführungsbeispiel eines zweiten Kupplungsteils.

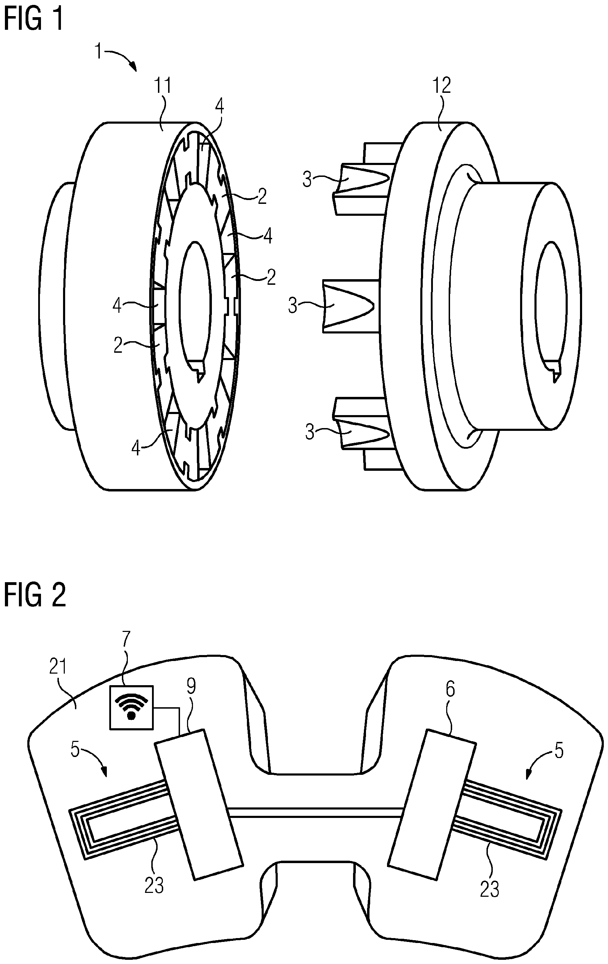

Die FIG 1 zeigt eine drehelastische Kupplung 1. Diese weist ein erstes Kupplungsteil 11 und ein zweites Kupplungsteil 12 auf. Die drehelastische Kupplung 1 ist in der Darstellung getrennt und kann in diesem Zustand kein Drehmoment zwischen den beiden Kupplungsteilen 11,12 übertragen. Das erste Kupplungsteil 11 weist Elastomere 2 auf, die beispielsweise kreisförmig im ersten Kupplungsteil 11 angeordnet sind. Zwischen den Elastomeren ergeben sich Zwischenräume 4.

Das zweite Kupplungsteil 12 weist Nocken 3 auf. Diese Nocken 3 greifen im verbundenen Zustand der drehelastischen Kupplung 1, in die Zwischenräume 4 des ersten Kupplungsteils 11. Im verbundenen Zustand kann dann die drehelastische Kupplung 1 ein Drehmoment zwischen den beiden Kupplungsteilen 11,12 übertragen.

Die Elastomere 2 unterliegen einem Verschleiß, der durch die vorgeschlagene Anordnung, die genauer in den folgenden Figuren beschrieben wird, überwacht werden kann.

Die FIG 2 zeigt ein erstes Ausführungsbeispiel eines ersten Elastomers 21 der Elastomere 2, in dem eine entsprechende Verschleißüberwachung angeordnet ist. Zur Vermeidung von Wiederholungen wird auf die Beschreibung zur FIG 1 sowie auf die dort eingeführten Bezugszeichen verwiesen. Dieses erste Elastomer 21 weist ein Schaltelement 5 auf, das beispielsweise durch eine Drahtschleife 23 gebildet werden kann. Diese Drahtschleife 23 ist mit einer Überwachungseinrichtung 9 verbunden. Die Überwachungseinrichtung 9 überwacht den Verschleiß. Dazu ist die Überwachungseinrichtung 9 mit einer Stromversorgung 6 verbunden. Über diese Verbindung bezieht die Überwachungseinrichtung 9 elektrische Energie aus der Stromversorgung 6, die beispielsweise durch einen Energiespeicher wie einer Batterie, einem Akkumulator oder einem Kondensator, insbesondere einem Doppelschichtkondensator, bereitgestellt wird. Erkennt die Überwachungseinrichtung 9 eine Verschleißgrenze, so kann sie diese Information mittels eines Funksenders 7 übertragen. Alternativ oder ergänzend ist auch die Meldung über das Erreichen der Verschleißgrenze über ein in dieser FIG nicht dargestelltes Leuchtmittel möglich. Das Funksignal wird dann von einem hier nicht dargestellten Empfänger außerhalb der drehelastischen Kupplung 1 aufgenommen und ausgewertet. Durch den Betrieb der drehelastischen Kupplung 1 kommt es zum Verschleiß an den Elastomeren 2 und damit auch am ersten Elastomer 21. Durch den Abrieb der Oberfläche oder der Bildung von Rissen an der Oberfläche des ersten Elastomers 21 tritt die Drahtschleife 23 an diese Oberfläche. Durch weiteren Verschleiß wird die Drahtschleife 23 unterbrochen. Die mit der Drahtschleife 23 verbundene Überwachungseinrichtung 9 erkennt nun den Leerlauf und schließt daraus auf das Vorliegen der Verschleißgrenze. Diese Überwachung bzw. das entsprechende Überwachungsverfahren hat den Vorteil, dass diese Überwachung bzw. dieses Verfahren auch beim Stillstand der Kupplung 1 den Verschleiß des Elastomers 2 zuverlässig erkennt und meldet, wenn die Nocken 3 nicht am ersten Elastomer 21 anliegen. Diesen Zustand kann die Überwachungseinrichtung 9 mittels des Funksenders 7 oder mittels des hier nicht dargestellten Leuchtmittels kommunizieren.

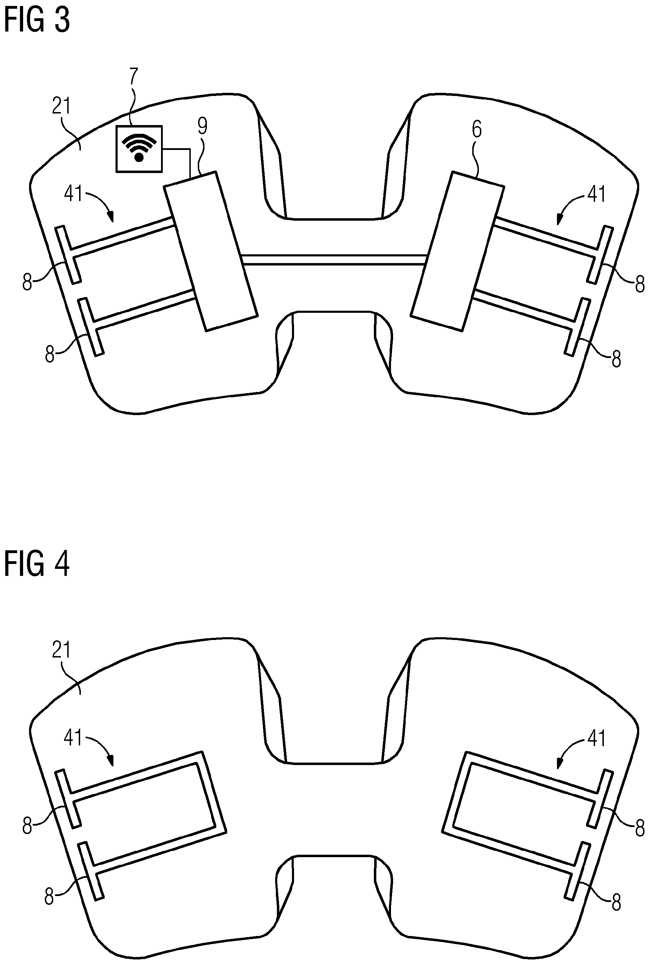

Die FIG 3 zeigt ein weiteres Ausführungsbeispiel eines ersten Elastomers 21. Zur Vermeidung von Wiederholungen wird auf die Beschreibung zu den Figuren 1 und 2, sowie auf die dort eingeführten Bezugszeichen verwiesen. Anstelle des Schaltelements 5 der FIG 2 sind in diesem Ausführungsbeispiel nur Teile 41 des Schaltelements 5 im Innern des ersten Elastomers 21 angeordnet. Dazu gehören Kontakte 8, die mit der Überwachungseinrichtung 9 verbunden sind. Auch diese treten, wie oben bereits beschrieben, bei Erreichen der Verschleißgrenze an die Oberfläche des ersten Elastomers 21. Dabei werden die zwei Kontakte 8 durch eine erste Nocke 31 der Nocken 3 des zweiten Kupplungsteils 12 elektrisch leitend miteinander verbunden. Diesen Kurzschluss durch das Schaltelement 5, das durch den Teil 41 des Schaltelements 5 und der ersten Nocke 31 gebildet wird, erkennt die Überwachungseinrichtung 9, die diesen Zustand dann mittels des Funksenders 7 oder des Leuchtmittels übertragen kann.

Die FIG 4 zeigt ein weiteres Ausführungsbeispiel eines ersten Elastomers 21. Zur Vermeidung von Wiederholungen wird auf die Beschreibung zu den Figuren 1 bis 3, sowie auf die dort eingeführten Bezugszeichen verwiesen. Dabei sind die Überwachungseinrichtung 9 und der Funksender 7 außerhalb des ersten Elastomers 21 angeordnet. Dadurch wird im ersten Elastomer 21 auch keine Stromversorgung 6 benötigt. Durch Erreichen der Verschleißgrenze treten die Kontakte 8 wieder an die Oberfläche des ersten Elastomers 21 und damit in Berührung mit der ersten Nocke 31. Die erste Nocke 31 weist wieder eine leitfähige Oberfläche auf. Dabei teilt sich die Oberfläche in mindestens zwei leitfähige Oberflächenteile, die voneinander elektrisch isoliert sind. Über die Kontakte 8 werden jedoch diese beiden Oberflächenteile miteinander elektrisch verbunden und es entsteht ein Kurzschluss zwischen den Oberflächenteilen. Diesen Kurzschluss erkennt die Überwachungseinrichtung 9, die diesen Zustand dann mittels des Funksenders 7 übertragen kann.

Die Anordnung der Überwachungseinrichtung 9 und/oder des Funksenders 7 kann auch bei der Ausgestaltung nach FIG 2 au-ßerhalb des ersten Elastomers 21 erfolgen.

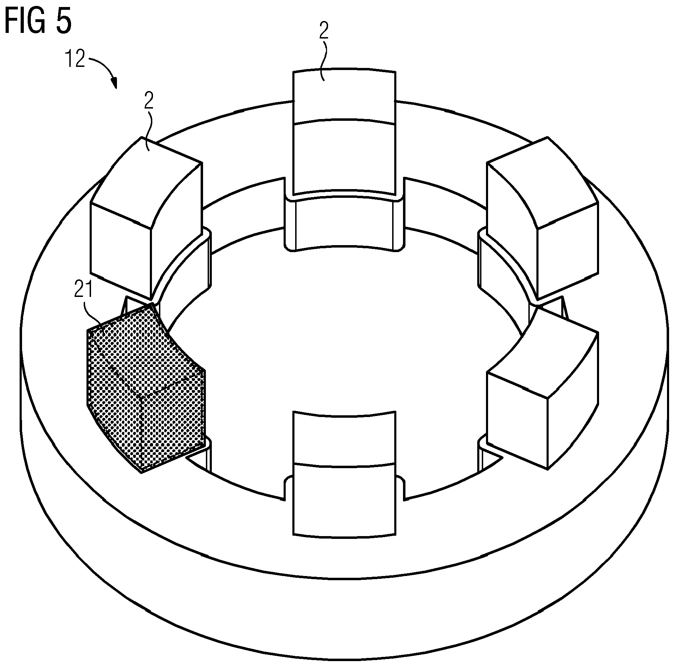

Die FIG 5 zeigt ein Ausführungsbeispiel des zweiten Kupplungsteils 12. Zur Vermeidung von Wiederholungen wird auf die Beschreibung zu den vorhergehenden Figuren, sowie auf die dort eingeführten Bezugszeichen verwiesen. Dieses zweite Kupplungsteil 12 weist Nocken 3 auf, die im verbundenen Zustand der drehelastischen Kupplung 1 in die Zwischenräume 4 des ersten Kupplungsteils 11 eingreifen. In dieser Darstellung ist neben den Nocken 3 eine erste Nocke 31 zu erkennen, dessen Oberfläche mit einem leitfähigen Material überzogen ist, um Kontakte 8 des ersten Elastomers 21 elektrisch zu verbinden oder einen Kurzschluss über die Kontakte 8 zu erkennen. Ebenso ist es alternativ möglich, dass die erste Nocke 31 ein leitfähiges Material aufweist oder sogar aus einem leitfähigen Material besteht.

Zusammenfassend betrifft die Erfindung eine drehelastische Kupplung, wobei die drehelastische Kupplung ein erstes Kupplungsteil mit Elastomeren aufweist, wobei die Elastomere derart in dem ersten Kupplungsteil angeordnet sind, dass durch die Elastomere eine Kraft auf ein zweites Kupplungsteil übertragbar ist, wenn das erste Kupplungsteil und das zweite Kupplungsteil miteinander verbunden sind. Zur Verbesserung der Verschleißerkennung wird vorgeschlagen, dass die drehelastische Kupplung ein Schaltelement aufweist, wobei das Schaltelement zumindest teilweise in einem ersten Elastomer der Elastomere angeordnet ist. Ferner betrifft die Erfindung ein Verfahren zur Herstellung eines ersten Elastomers für eine derartige drehelastische Kupplung, wobei das erste Elastomer mittels eines 3D-Drucks gedruckt wird. Die Erfindung betrifft weiter ein Verfahren zum Erkennen eines Verschleißzustandes für eine derartige drehelastische Kupplung, wobei durch eine Schalthandlung des Schaltelements eine Verschleißgrenze erkannt wird.

## Patentansprüche

1. Drehelastische Kupplung (1), wobei die drehelastische Kupplung (1) ein erstes Kupplungsteil (11) mit Elastomeren (2) aufweist, wobei die Elastomere (2) derart in dem ersten Kupplungsteil (11) angeordnet sind, dass durch die Elastomere (2) eine Kraft auf ein zweites Kupplungsteil (12) übertragbar ist, wenn das erste Kupplungsteil (11) und das zweite Kupplungsteil (12) miteinander verbunden sind, **dadurch gekennzeichnet, dass** die drehelastische Kupplung (1) ein Schaltelement (5) aufweist, wobei das Schaltelement (5) zumindest teilweise in einem ersten Elastomer (21) der Elastomere (2) angeordnet ist.

2. Drehelastische Kupplung (1) nach Anspruch 1, wobei die Elastomere (2) derart, insbesondere kreisförmig, in dem ersten Kupplungsteil (11) angeordnet sind, dass sich zwischen den Elastomeren (2) jeweils ein Zwischenraum (4) bildet, wobei das zweite Kupplungsteil (12) der drehelastischen Kupplung (1) Nocken (3) aufweist, wobei die Nocken (3) in die Zwischenräume (4) eingreifen, wenn das erste Kupplungsteil (11) und das zweite Kupplungsteil (12) miteinander verbunden sind.

3. Drehelastische Kupplung (1) nach einem der Ansprüche 1 oder 2, wobei die drehelastische Kupplung (1) eine Stromversorgung (6) und einen Funksender (7) aufweist, wobei mittels des Funksenders (7) ein Signal über den Verschleißzustand der drehelastischen Kupplung (1) übertragbar ist.

4. Drehelastische Kupplung (1) nach einem der Ansprüche 1 oder 2, wobei die drehelastische Kupplung (1) eine Stromversorgung (6) und ein Leuchtmittel aufweist, wobei mittels des Leuchtmittels ein Signal über den Verschleißzustand der drehelastischen Kupplung (1) übertragbar ist.

5. Drehelastische Kupplung (1) nach einem der Ansprüche 1 bis 4, wobei das Schaltelement (5) vollständig im ersten Elastomer (21) angeordnet ist.

6. Drehelastische Kupplung (1) nach einem der Ansprüche 1 bis 4, wobei zumindest eine erste Nocke (31) der Nocken (3) zum ersten Elastomer (21) benachbart angeordnet ist, wenn das erste Kupplungsteil (11) und das zweite Kupplungsteil (12) miteinander verbunden sind, wobei zumindest eine Oberfläche der ersten Nocke (31) elektrisch leitfähig ausgebildet ist, wobei zwei im ersten Elastomer (21) angeordnete Kontakte (8) des Schaltelements (5) derart im ersten Elastomer (21) angeordnet sind, dass beim Vorliegen eines definierten Verschleißzustands die Kontakte (8) mittels der ersten Nocke (31) elektrisch leitend miteinander verbunden sind.

7. Verfahren zur Herstellung eines ersten Elastomers (21) für eine drehelastische Kupplung (1) nach einem der Ansprüche 1 bis 6, wobei das erste Elastomer (21) mittels eines 3D-Drucks gedruckt wird.

8. Verfahren nach Anspruch 7, wobei das Schaltelement (5) durch Verwendung eines elektrisch leitfähigen Materials in das Innere des ersten Elastomers (21) mittels des 3D-Drucks eingebracht wird.

9. Verfahren nach einem der Ansprüche 7 oder 8, wobei Öffnungen und/oder Hohlräume zum Einlegen von Kontakten (8) in das Innere des ersten Elastomers (21) mittels des 3D-Drucks eingebracht werden.

10. Verfahren nach einem der Ansprüche 7 bis 9, wobei eine weitere Öffnung und/oder ein weiterer Hohlraum zum Einlegen der Stromversorgung (6) oder des Funksenders in das Innere des ersten Elastomers (21) mittels des 3D-Drucks eingebracht wird.

11. Verfahren zum Erkennen eines Verschleißzustandes für eine drehelastische Kupplung (1) nach einem der Ansprüche 1 bis 6, wobei durch eine durch einen Verschleiß des Elastomers (2) hervorgerufene Schalthandlung des Schaltelements (5) eine Verschleißgrenze erkannt wird.

12. Verfahren nach Anspruch 11, wobei der Verschleißzustand mittels eines Funksenders (7) gemäß Anspruch 3 oder eines Leuchtmittels gemäß Anspruch 4, übermittelt wird.
